Europäisches Patentamt

European Patent Office

Office européen des brevets

(19)

(11) Numéro de publication : **0 165 852**
**B1**

(12) **FASCICULE DE BREVET EUROPÉEN**

(45) Date de publication du fascicule du brevet :
28.09.88

(51) Int. Cl.⁴ : **G 01 F 23/28, G 01 F 17/00**

(21) Numéro de dépôt : 85401038.6

(22) Date de dépôt : 28.05.85

(54) Dispositif de mesure par ultrasons du niveau et/ou du volume d'un liquide dans un récipient.

(30) Priorité : 29.05.84 FR 8408381

(43) Date de publication de la demande :
27.12.85 Bulletin 85/52

(45) Mention de la délivrance du brevet :
28.09.88 Bulletin 88/39

(84) Etats contractants désignés :
DE GB IT SE

(56) Documents cités :
FR-A- 1 477 470
FR-A- 2 055 999
FR-A- 2 391 456
FR-A- 2 479 448
US-A- 3 394 589
US-A- 4 090 407

(73) Titulaire : REGIE NATIONALE DES USINES RENAULT
Boîte postale 103 8-10 avenue Emile Zola
F-92109 Boulogne-Billancourt (FR)

(72) Inventeur : Bellart, Jean-Pierre
12, Allée des Sablières
F-78170 La Celle Saint Cloud (FR)
Inventeur : Labaune, Camille
8, rue du 4 Septembre
F-78112 Fourqueux (FR)
Inventeur : Moyses, Claude
232, rue de Courcelles
F-75017 Paris (FR)
Inventeur : Wiart, Patrice
Rue E. Vaillant Résidence M. Sembat
F-92800 Puteaux (FR)

(74) Mandataire : Réal, Jacques et al
Régie Nationale des Usines Renault SCE 0804
F-92109 Boulogne Billancourt Cedex (FR)

EP 0 165 852 B1

### Description

La présente invention concerne un dispositif de mesure par ultrasons du niveau et/ou du volume d'un liquide dans un récipient.

Il est connu de mesurer le niveau de liquide dans un récipient au moyen d'un flotteur associé à un potentiomètre dont la résistance varie proportionnellement au niveau de liquide. Malheureusement, si le récipient est de forme complexe et sujet à des variations d'assiette importantes comme c'est généralement le cas pour les réservoirs de carburant de véhicules automobiles, la mesure de niveau peut dans certaines conditions être fortement entachée d'erreur.

Il est également connu de mesurer par ultrasons le niveau d'un liquide dans un récipient au moyen d'un dispositif comprenant une cellule émettrice d'ondes ultrasonores placée dans le récipient de manière à être constamment immergée dans le liquide, ainsi que des moyens de mesure du temps de propagation d'une onde émise entre la cellule émettrice et un récepteur après réflexion à la surface du liquide.

Toutefois, la précision de la mesure du niveau d'un liquide par ultrasons au moyen de la plupart des dispositifs connus est fortement tributaire d'une connaissance exacte de la vitesse de propagation du son dans le liquide considéré. Cette vitesse dépend de la nature du liquide, de sa température, mais elle est également sujette à des dispersions dues à des variations de composition (mélanges, gaz dissous) et à un vieillissement du liquide que des capteurs permettent difficilement de prendre en compte.

Le brevet FR-A-2 391 456 décrit un dispositif de mesure de niveau par ultrasons qui permet de s'affranchir des variations de vitesse de propagation du son dans le milieu considéré. Bien que ce dispositif prévoit une cellule placée au dessus du niveau à mesurer et une propagation des sons dans un milieu gazeux, la solution qui y est décrite est transposable à un dispositif à cellule émettrice immergée et propagation ultrasonore dans un liquide dont le niveau est à mesurer. Cette solution consiste à émettre simultanément une onde ultrasonore vers la surface dont l'éloignement de la cellule émettrice est à mesurer et vers une surface de référence placée à une distance connue de la cellule, et à mesurer les temps de propagation engendrés entre l'émission et la réception par la cellule de l'onde ultrasonore après réflexion de celle-ci sur les deux surfaces. Le rapport des temps de propagation est alors égal au rapport des distances indépendamment de la vitesse de propagation puisque celle-ci a lieu dans les milieux identiques et, connaissant la distance entre la cellule et la surface de référence, on peut en déduire celle qui sépare la cellule de l'autre surface.

Cependant, la simple transposition du dispositif conforme au brevet FR-A-2 391 456 à la mesure de niveau d'un liquide dans un récipient par immersion de la cellule émettrice-réceptrice au voisinage du fond du récipient ne permet pas de résoudre tous les problèmes que l'on rencontre dans une telle configuration. L'un de ces problèmes est que la mesure de niveau peut être sensiblement faussée en cas de variation d'assiette du récipient, cette erreur pouvant être amplifiée dans le cas d'un récipient de forme complexe si l'on traduit la mesure de niveau en mesure de volume.

Un autre problème tient au fait que l'onde arrière émise par la cellule est susceptible de créer des échos multiples avec une paroi opposée à la direction privilégiée d'émission, ce qui risque de fausser la mesure, et que les mesures d'un faible niveau de liquide sont rendues délicates si le premier écho reçu par la cellule se trouve dans sa zone d'amortissement électrique.

L'invention vise à fournir un dispositif de mesure de niveau à ultrasons du type décrit au brevet FR-A-2 391 456 qui permette de minimiser, sinon d'éliminer, les problèmes évoqués ci-dessus, tout en étant insensible à la nature et aux évolutions éventuelles des propriétés du liquide dont le niveau est à mesurer.

A cet effet, l'invention a pour objet un dispositif de mesure par ultrasons du niveau et/ou du volume d'un liquide dans un récipient, comprenant une cellule émettrice-réceptrice adaptée pour émettre des ondes ultrasonores respectivement vers la surface d'un liquide dont le niveau est à mesurer et vers une surface de référence placée à une distance prédéterminée connue de la cellule, des moyens d'excitation de la cellule, et des moyens de mesure des temps qui s'écoulent entre l'excitation de la cellule et la réception par celle-ci des échos de l'onde émise sur la surface du liquide et la surface de référence respectivement, caractérisé en ce que ladite cellule est interposée dans un guide d'ondes acoustiques entre un tronçon de mesure s'étendant sensiblement suivant la ligne de carène du récipient et un tronçon de référence terminé à son extrémité opposée à la cellule par un réflecteur placé avec la cellule et le tronçon de référence dans une zone du récipient où il est toujours immergé dans le liquide.

Suivant un exemple de réalisation, le tronçon de référence a une longueur supérieure à la longueur du tronçon de mesure comprise entre la cellule et le niveau maximal que peut atteindre le liquide dans le récipient et les moyens de mesure comprennent un circuit de détection d'échos à seuil variable adapté pour élever son seuil initial de détection, en réponse à la réception d'un premier écho correspondant à la réflexion de l'onde émise sur la surface du liquide, à un niveau supérieur autorisant la détection de l'écho correspondant à la réflexion de l'onde émise sur la surface de référence et interdisant la détection des échos secondaires résultant des réflexions multiples du premier écho sur la cellule et la surface du liquide.

D'autres caractéristiques et avantages de l'invention ressortiront de la description qui va suivre d'un mode de réalisation donné uniquement à titre d'exemple et illustré par les dessins annexés sur lesquels :

la figure 1 est une vue schématique en perspective d'un récipient équipé d'un dispositif de mesure de niveau de liquide suivant l'invention ;

la figure 2 est une vue en coupe longitudinale d'un raccord dans lequel est logée la cellule émettrice-réceptrice ;

la figure 3 est un schéma d'un circuit électronique connecté à la cellule émettrice-réceptrice ;

les figures 4a à 4e sont des chronogrammes de signaux apparaissant dans un circuit de la figure 3.

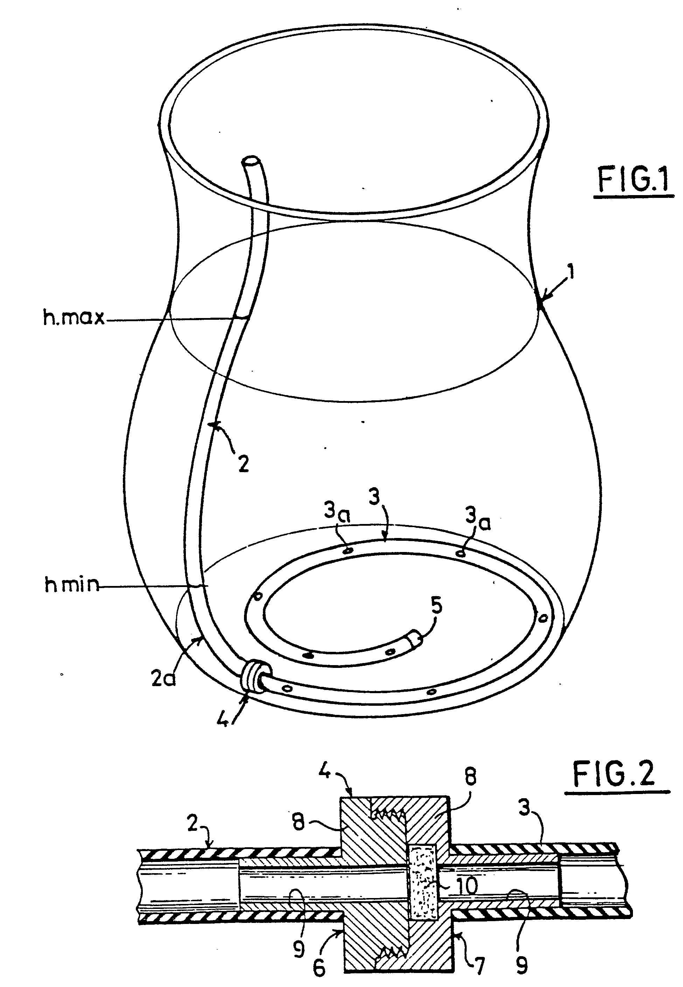

En se reportant à la figure 1, dans le récipient 1 contenant le liquide dont le niveau ou le volume est à mesurer, par exemple un réservoir de carburant de véhicule automobile, est monté un dispositif de mesure à ultrasons comprenant deux tronçons 2 et 3 de tube réunis par un raccord 4 dans lequel est logée une cellule émettrice-réceptrice d'ondes ultrasonores, par exemple une cellule piézoélectrique.

Les tronçons 2 et 3 de tube constituent des guides d'ondes acoustiques et présentent à cet effet une impédance très différente de celle du liquide.

Le tronçon 2, ci-après appelé tronçon de mesure, s'étend sensiblement suivant la ligne de carène du récipient de manière à minimiser l'influence des variations d'assiette de ce dernier sur la mesure de niveau, et il se trouve plus ou moins immergé dans le liquide suivant le niveau de ce dernier qui peut être compris entre une valeur minimale $h_{min}$ et une valeur maximale $h_{max}$. Le tronçon de tube 2 présente une partie coudée 2a comprise entre le raccord 4 et le point correspondant au niveau minimal $h_{min}$ : cette partie coudée 2a, qui est constamment immergée dans le liquide, a une longueur telle que, lorsque le liquide est au niveau minimal $h_{min}$, le temps de propagation aller et retour de l'onde ultrasonore avec réflexion sur la surface de liquide au niveau $h_{min}$ est supérieur à la période d'amortissement de la cellule afin d'assurer une détection correcte de l'écho.

Le tronçon de tube 3, ci-après appelé tronçon de référence, est placé dans une zone du récipient 1 où il est constamment immergé dans le liquide et a une longueur L supérieure à la longueur l de la partie du tronçon 2 comprise entre le raccord 4 et le point correspondant au niveau maximal $h_{max}$ du liquide. De plus, le tronçon de référence 3 est terminé à son extrémité opposée au raccord 4 par un réflecteur 5 qui présente une impédance très différente de celle du liquide de manière à assurer une très bonne réflexion de l'onde arrière émise par la cellule dans le tronçon de référence 3 : on est ainsi assuré que le premier écho provenant du réflecteur 5 parviendra toujours à la cellule après le premier écho dû à la réflexion de l'onde ultrasonore sur la surface du liquide et que l'amplitude de l'écho de référence sera également toujours supérieure à celle de l'écho de mesure. Enfin, des trous 3a sont ménagés à la partie supérieure du tronçon de référence 3 pour éliminer la présence dans le liquide de bulles qui pourraient fausser la mesure, et de tels trous peuvent être également prévus, si nécessaire, dans la partie coudée 2a du tronçon 2.

La figure 2 montre en coupe un exemple de réalisation du raccord 4 : celui-ci est constitué de deux parties 6 et 7 comprenant chacune une collerette 8 prolongée par un embout tubulaire 9 sur lequel est emmanchée l'extrémité du tronçon de tube correspondant 2, 3. Les collerettes 8 des parties 6 et 7 sont assemblées par vissage et ménagent entre elles un logement dans lequel est reçue la cellule émettrice-réceptrice d'ondes ultrasonores 10 constituée par exemple d'une pastille piézoélectrique : ainsi la face avant de la cellule 10 définit l'une des extrémités du tronçon de mesure 2 tandis que la face arrière définit l'extrémité adjacente du tronçon 3. Enfin, la cellule 10 est connectée de façon étanche par des moyens appropriés (non représentés) à un circuit électronique.

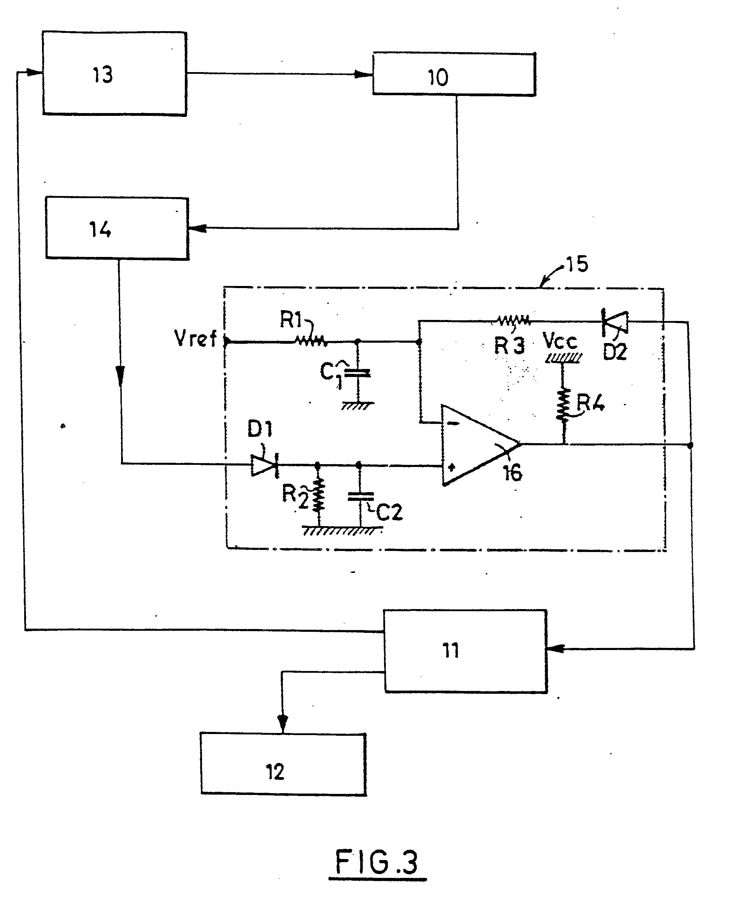

Ce circuit électronique représenté à la figure 3 comprend un microprocesseur 11 connecté à un dispositif 12 d'affichage de niveau et/ou de volume et à un générateur 13 pour commander l'excitation de la cellule 10 avec une certaine périodicité. La cellule piézoélectrique 10 est également connectée à l'entrée d'un amplificateur 14 dont la sortie attaque un circuit de détection d'échos à seuil variable 15.

Le circuit à seuil variable 15 comprend un comparateur 16 dont l'entrée positive est attaquée par la sortie de l'amplificateur 14 par l'intermédiaire d'une diode $D_1$. Une résistance $R_2$ et un condensateur $C_2$ sont connectés en parallèle entre l'entrée positive du comparateur 16 et la masse.

La sortie du comparateur 16, connectée à une source de tension de polarisation Vcc par l'intermédiaire d'une résistance $R_4$, constitue une entrée du microprocesseur 11. Le comparateur 16 présente entre sa sortie et son entrée négative une boucle de contre-réaction constituée d'une diode $D_2$ et d'une résistance $R_3$ connectées en série. Enfin, l'entrée négative du comparateur 16 est connectée à une source de tension de référence par l'intermédiaire d'une résistance $R_1$ tandis qu'un condensateur $C_1$ est connecté entre l'entrée négative du comparateur 16 et la masse.

Le fonctionnement du dispositif de mesure suivant l'invention sera maintenant décrit en se référant aux chronogrammes des figures 4a à 4e sur lesquels :

la figure 4a montre le signal émis par le microprocesseur 11 pour exciter la cellule 10 par l'intermédiaire du générateur 13 ;

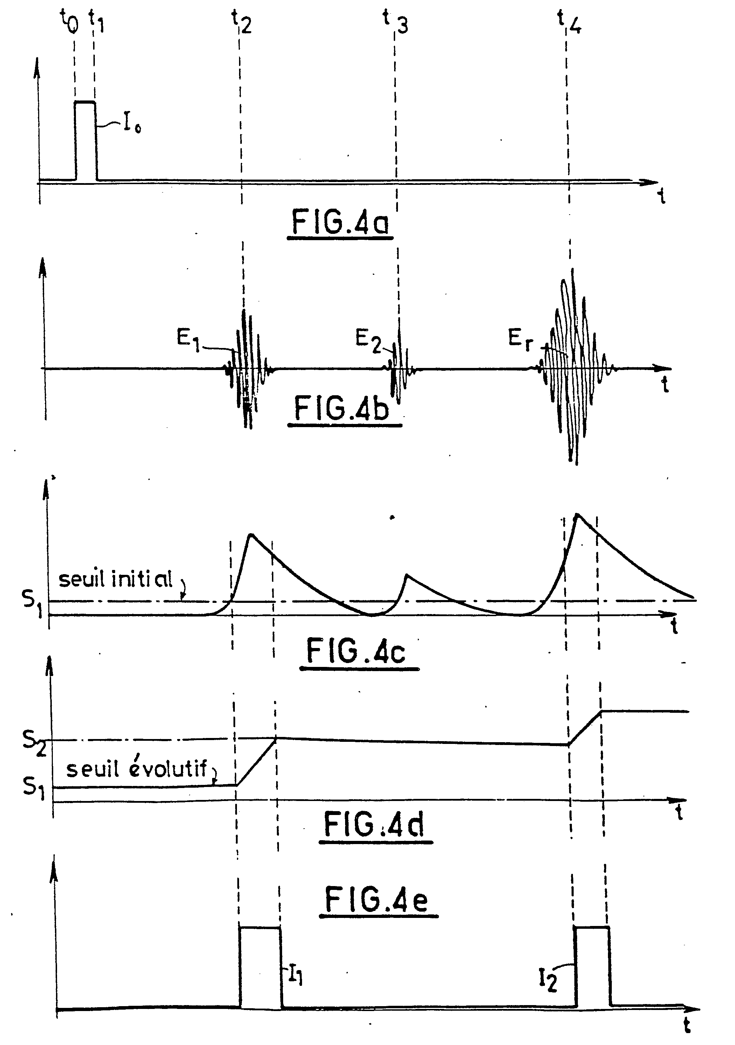

la figure 4b représente les signaux apparaissant à la sortie de l'amplificateur 14 ;

la figure 4c représente le signal apparaissant à l'entrée positive du comparateur 16 ;

la figure 4d représente le signal apparaissant à l'entrée négative du comparateur 16 ; et

la figure 4e représente les signaux générés à la sortie du comparateur 16.

Entre les instants $t_0$ et $t_1$, le microprocesseur 11 émet une impulsion $I_0$ qui suscite la génération simultanée par la cellule 10 d'ondes ultrasonores avant et arrière dans le tronçon de mesure 2 et le tronçon de référence 3 respectivement. Sachant que la longueur L de ce dernier est supérieure à la longueur maximale l susceptible d'être immergée du tronçon de mesure 3, on est certain que le premier écho reçu au voisinage de l'instant $t_2$ provient de la réflexion sur la surface du liquide de l'onde avant émise par la cellule 10. Cette dernière, fonctionnant en récepteur, convertit le signal acoustique reçu en un signal électrique amplifié par l'amplificateur 14 (figure 4b). Ce signal est appliqué à l'entrée positive du comparateur 16 après redressement par la diode $D_1$ et intégration par le circuit $R_2C_2$ dont la constante de temps est beaucoup plus faible que celle du circuit $R_1C_1$ (figure 4c).

Le condensateur $C_1$ étant initialement faiblement chargé, le seuil initial $S_1$ du comparateur 16 est relativement bas de sorte que tout premier écho $E_1$ d'amplitude significative reçu par la cellule avec un maximum à l'instant $t_2$ est sytématiquement détecté, ce qui se traduit par la génération à la sortie du comparateur 16 d'une première impulsion $I_1$ coïncidant avec ce premier écho $E_1$ (figure 4e).

Par ailleurs, le basculement de la sortie du comparateur 16 provoque la charge du condensateur $C_1$ à travers la diode $D_2$ et la résistance $R_3$, jusqu'à ce que la sortie du comparateur 16 revienne à l'état bas. Du fait de la constante de temps élevée du circuit $R_1C_1$, ce circuit $R_1C_1$ maintient à l'entrée négative du comparateur 16 un niveau de tension qui correspond à un deuxième seuil évolutif $S_2$ du comparateur 16 (figure 4d).

Ce seuil $S_2$ supérieur au seuil initial $S_1$ est choisi de manière à interdire la détection au temps $t_3$ d'un deuxième écho $E_2$ résultant de la réflexion du premier écho $E_1$ sur la cellule 10 puis à nouveau sur la surface du liquide, deuxième écho $E_2$ dont l'amplitude est nécessairement atténuée par rapport à celle du premier écho $E_1$.

Par contre, ce seuil $S_2$ est adapté pour permettre de détecter le premier écho $E_r$ provenant du réflecteur 5 et dont on est sûr que son amplitude sera supérieure à celle du premier écho $E_1$ sur la surface du liquide du fait du choix approprié de l'impédance du réflecteur 5. Aussi, ce premier écho $E_r$, reçu par la cellule 10 après réflexion sur le réflecteur 5 et détecté avec un maximum à l'instant $t_4$, se traduit-il par la génération d'une deuxième impulsion $I_2$ à la sortie du comparateur 16.

Le microprocesseur 11 compte de manière classique au moyen d'une horloge interne les temps qui s'écoulent entre l'instant $t_0$ de génération de l'impulsion $I_0$ d'excitation de la cellule 10 et les instants d'apparition des première et deuxième impulsions $I_1$, $I_2$. Le rapport des temps ainsi mesurés étant égal à celui des distances, on peut en déduire le niveau de liquide puisque la distance entre la cellule 10 et le réflecteur 5 est fixe et connue. Le microprocesseur 11 peut également, à partir du rapport précité des temps de propagation, fournir directement une indication de volume par adressage d'une table programmée en fonction de la forme du récipient. Cette indication peut être affichée sur le dispositif d'affichage 12 en unité de volume ou en pourcentage de la contenance maximale du récipient.

Le cycle de mesure décrit ci-dessus est répété avec une périodicité fixée par le microprocesseur 11 et adaptée pour permettre l'amortissement de la cellule 10 et le retour du circuit 15 au seuil initial $S_1$.

En variante, le tronçon de référence 3 peut avoir une longueur L inférieure à la longueur du tronçon de mesure 2 comprise entre la cellule 10 et le niveau minimal $h_{min}$. Dans ce cas le circuit électronique de la figure 3 peut être conservé inchangé en choisissant un réflecteur 5 qui donne un écho de référence d'amplitude inférieure à celle du premier écho de mesure. Bien entendu, le circuit de détection d'échos à seuil variable 15 est alors adapté pour élever son seuil initial de détection, en réponse à la réception d'un premier écho correspondant à la réflexion de l'onde émise sur le réflecteur 5, à un niveau supérieur autorisant la détection ultérieure de l'écho correspondant à la première réflexion de l'onde émise sur la surface de liquide et interdisant la détection de tout écho d'amplitude inférieure audit niveau supérieur.

## Revendications

1. Dispositif de mesure par ultrasons du niveau et/ou du volume d'un liquide dans un récipient, comprenant une cellule émettrice-réceptrice (10) adaptée pour émettre des ondes ultrasonores dans un guide d'ondes acoustiques respectivement vers la surface d'un liquide dont le niveau est à mesurer et vers une surface de référence (5) placée à une distance prédéterminée connue de la cellule, des moyens (11, 13) d'excitation de la cellule, et des moyens (11, 14, 15) de mesure des temps qui s'écoulent entre l'excitation de la cellule et la réception par celle-ci des échos de l'onde émise sur la surface du liquide et la surface de référence respectivement, caractérisé en ce que ladite cellule (10) est interposée dans le guide d'ondes acoustiques entre un tronçon de mesure (2) s'étendant sensiblement suivant la ligne de carène du récipient (1) et un tronçon de référence (3) terminé à son extrémité opposée à la cellule par un réflecteur (5) placé avec la cellule (10) et le tronçon de référence (3) dans une zone du récipient où il est toujours immergé dans le liquide.

2. Dispositif selon la revendication 1, caractérisé en ce que le tronçon de référence (3) a une longueur (L) supérieure à la longueur (I) du tronçon de mesure comprise entre la cellule (10) et le niveau maximal ($h_{max}$) que peut atteindre le liquide dans le récipient (1) et en ce que les moyens de mesure (11, 14, 15) comprennent un circuit de détection d'échos à seuil variable (15) adapté pour élever son seuil initial de détection $(S_1)$, en réponse à la réception d'un premier écho $(E_1)$ correspondant à la réflexion de l'onde émise sur la surface du liquide, à un niveau supérieur $(S_2)$ autorisant la détection de l'écho correspondant à la réflexion de l'onde émise sur la surface de référence (15) et interdisant la détection des échos secondaires $(E_2)$ résultant des réflexions multiples du premier écho sur la cellule (10) et la surface du liquide.

3. Dispositif selon la revendication 1, caractérisé en ce que le tronçon de référence (3) a une longueur (L) inférieure à la longueur du tronçon de mesure (2) comprise entre la cellule (10) et le niveau minimal $(h_{min})$ auquel peut descendre le liquide dans le récipient (1) et en ce que les moyens de mesure (11, 14, 15) comprennent un circuit de détection d'échos à seuil variable (15) adapté pour élever son seuil initial de détection, en réponse à la réception d'un premier écho correspondant à la réflexion de l'onde émise sur le réflecteur (5), à un niveau supérieur autorisant la détection ultérieure de l'écho correspondant à la première réflexion de l'onde émise sur la surface de liquide et interdisant la détection de tout écho d'amplitude inférieure audit niveau supérieur.

4. Dispositif selon l'une quelconque des revendications 2 et 3, caractérisé en ce que le circuit de détection d'échos à seuil variable (15) comprend un comparateur (16) dont l'entrée positive est attaquée par le signal de sortie de la cellule (10) par l'intermédiaire d'un amplificateur (14), d'un redresseur $(D_1)$ et d'un premier circuit intégrateur $(R_2C_2)$ à faible constante de temps et dont la sortie est bouclée avec son entrée négative par l'intermédiaire d'un circuit à diode $(D_2)$ et résistance $(R_3)$ attaquant un second circuit intégrateur $(R_1C_1)$ à constante de temps élevée.

5. Dispositif selon l'une quelconque des revendications 1 à 4, caractérisé en ce que ledit guide d'ondes acoustiques est un tube, ledit tube (2, 3) et le réflecteur (5) ayant des impédances acoustiques différentes de celle du liquide.

6. Dispositif selon l'une quelconque des revendications 1 à 5, caractérisé en ce que ledit tronçon de référence (3) du guide d'ondes acoustiques présente des trous (3a) à sa partie supérieure.

7. Dispositif selon l'une quelconque des revendications 1 à 6, caractérisé en ce que le tronçon de mesure (2) présente une partie coudée (2a) comprise entre la cellule (10) et le point correspondant au niveau minimal $(h_{min})$ que peut atteindre le liquide dans le récipient, cette partie coudée (2a) ayant une longueur telle que, lorsque le liquide est au niveau minimal $(h_{min})$, le temps de propagation aller et retour de l'onde ultrasonore avec réflexion sur la surface du liquide au niveau minimal $(h_{min})$ est supérieur à la période d'amortissement de la cellule (10).

8. Dispositif selon l'une quelconque des revendications 1 à 7, caractérisé en ce que la cellule (10) est une pastille piézoélectrique dont une face définit l'une des extrémités du tronçon de mesure (2) et dont l'autre face définit l'extrémité adjacente du tronçon de référence (3).

9. Dispositif selon la revendication 8, caractérisé en ce que la pastille est enfermée entre les deux parties (7, 8) d'un raccord (4) présentant des embouts tubulaires (9) sur lesquels sont emmanchées lesdites extrémités des tronçons de mesure (2) et de référence (3).

**Claims**

1. Apparatus for measurement by ultra-sound of the level and/or the volume of a liquid in a container, comprising an emitter-receiver cell (10) adapted to emit ultrasonic waves in an acoustic wave guide respectively towards the surface of a liquid whose level is to be measured and towards a reference surface (5) disposed at a predetermined know distance from the cell, means (11, 13) for excitation of the cell, and means (11, 14, 15) for measuring the times which elapse between excitation of the cell and the reception thereby of the echoes of the wave emitted at the surface of the liquid and the reference surface respectively, characterised in that said cell (10) is interposed in the acoustic wave guide between a measuring portion (2) extending substantially along the line of the body of the container (1) and a reference portion (3) which is terminated at its end opposite to the cell by a reflector (5) disposed with the cell (10) and the reference portion (3) in a zone of the container where it is always immersed in the liquid.

2. Apparatus according to claim 1 characterised in that the reference portion (3) is of a length (L) which is greater than the length (l) of the measuring portion between the cell (10) and the maximum level $(h_{max})$ that the liquid can attain in the container (1) and that the measuring means (11, 14, 15) comprise a variable threshold echo detection circuit (15) adapted to raise its initial detection threshold $(S_1)$ in response to the reception of a first echo $(E_1)$ corresponding to the reflection of the wave emitted at the surface of the liquid, to a higher level $(S_2)$ permitting detection of the echo corresponding to reflection of the wave emitted at the reference surface (5) and preventing the detection of secondary echoes $(E_2)$ resulting from multiple reflections of the first echo at the cell (10) and the surface of the liquid.

3. Apparatus according to claim 1 characterised in that the reference portion (3) is of a length (L) which is less than the length of the measuring portion (2) between the cell (10) and the minimum level $(h_{min})$ to which the liquid in the container (1) can fall, and that the measuring means (11, 14, 15) comprise a variable-threshold echo detection circuit (15) adapted to raise its initial detection threshold in response to the reception of a first echo corresponding to reflection of the wave emitted at the reflector (5), to a higher level permitting subsequent detection of the echo corresponding to the first reflection of the wave emitted at the surface of the liquid and preventing detection of any echo of lower amplitude than said upper level.

4. Apparatus according to either one of claims 2 and 3 characterised in that the variable-threshold echo detection circuit (15) comprises a comparator (16) whose positive input receives the output signal of the cell (10) by way of an amplifier (14), a rectifier ($D_1$) and a first integrator circuit ($R_2C_2$) with a short time constant, and whose output is fed back to its negative input by way of a circuit comprising a diode ($D_2$) and a resistor ($R_3$) connected to a second integrator circuit ($R_1C_1$) with a high time constant.

5. Apparatus according to any one of claims 1 to 4 characterised in that said acoustic wave guide is a tube, said tube (2, 3) and the reflector (5) having acoustic impedances which are different from that of the liquid.

6. Apparatus according to any one of claims 1 to 5 characterised in that said reference portion (3) of the acoustic wave guide has holes (3a) in its upper part.

7. Apparatus according to any one of claims 1 to 6 characterised in that the measuring portion (2) has a bent part (2a) between the cell (10) and the point corresponding to the minimum level ($h_{min}$) that the liquid can attain in the container, said bent part (2a) being of a length such that when the liquid is at the minimum level the out-and-back propagation time of the ultrasonic wave with reflection at the surface of the liquid at the minimum level ($h_{min}$) is greater than the damping period of the cell (10).

8. Apparatus according to any one of claims 1 to 7 characterised in that the cell (10) is a piezoelectric pellet in which one face defines one of the ends of the measuring portion (2) and the other face defines the adjacent end of the reference portion (3).

9. Apparatus according to claim 8 characterised in that the pellet is enclosed between the two parts (7, 8) of a connection (4) having tubular end portions (9) on to which said ends of the measuring and reference portions (2, 3 respectively) are fitted.

**Patentansprüche**

1. Vorrichtung zum Messen durch Ultraschall des Flüssigkeitsstandes und/oder des Volumens in einem Behälter, mit einer Sender-Empfänger-Zelle (10) zum Aussenden von Ultraschallwellen in einen akustischen Wellenleiter in Richtung einer Flüssigkeitsoberfläche, deren Höhe zu messen ist bzw. in Richtung einer Referenzoberfläche (5), wie in einem vorgebenen bekannten Abstand zur Zelle angeordnet ist mit einer Anregungsanordnung (11, 13) für die Zelle und einer Anordnung (11, 14, 15) für die Messung der Zeit zwischen der Anregung der Zelle und dem Empfang der von der Oberfläche der Flüssigkeit bzw. der Referenzfläche stammenden Wellenechos durch die Zelle, dadurch gekennzeichnet, daß die Zelle (10) im akustischen Wellenleiter zwischen einem Meßabschnitt (2), der sich im wesentlichen entlang der Hülle des Behälters (1) erstreckt und einem Referenzabschnitt (3) angeordnet ist, dessen der Zelle abgewandtes Ende in einem Reflektor (5) mündet, der sich zusammen mit der Zelle (10) und dem Referenzabschnitt (3) in einem Bereich des Behälters befindet, in dem er ständig in die Flüssigkeit eintaucht.

2. Vorrichtung nach Anspruch 1, dadurch gekennzeichnet, daß der Referenzabschnitt (3) eine Länge L aufweist, die größer ist als die Länge l des Meßabschnitts zwischen der Zelle (10) und der maximalen Höhe ($h_{max}$), die die Flüssigkeit im Behälter (1) erreichen kann und daß die Meßanordnung (11, 14, 15) einen Meßkreis (15) für die Echos mit einstellbarem Schwellwert aufweist, wobei die anfängliche Meßschwelle ($S_1$) als Funktion des Empfangs eines ersten Echos $E_1$ entsprechend der von der Flüssigkeitsoberfläche reflektierten Welle auf einen größeren Wert $S_2$ erhöht wird, zur Ermöglichung der Feststellung des Echos, das der Reflektion der von der Referenzoberfläche (5) stammenden Welle entspricht und gleichzeitig die Feststellung von sekundären Echos $E_2$ unterdrückt, die aus Mehrfachreflektionen des ersten Echos an der Zelle (10) und der Flüssigkeitsoberfläche resultieren.

3. Vorrichtung nach Anspruch 1, dadurch gekennzeichnet, daß der Referenzabschnitt (3) eine Länge L aufweist, die kleiner als die Länge des Meßabschnitts (2) ist zwischen der Zelle (10) und einer minimalen Höhe ($h_{min}$), die die Flüssigkeit im Behälter (1) erreichen kann und daß die Meßanordnung (11, 14, 15) einen Meßkreis (15) aufweist für die Echos mit einstellbarem Schwellwert, um die ursprüngliche Meßschwelle als Funktion des Empfangs eines ersten Echos zu erhöhen, das der Reflektion der ausgesandten Welle am Reflektor (5) entspricht, auf einen höheren Wert zur anschließenden Feststellung eines Echos, das der ersten Reflektion der ausgesandten Welle auf der Flüssigkeitsoberfläche entspricht und die Feststellung aller anderen Echos, deren Amplitude kleiner als der höhere Wert ist, unterdrückt.

4. Vorrichtung nach einem der Ansprüche 2 und 3, dadurch gekennzeichnet, daß der meßkreis (15) für die Echos mit einstellbarem Schwellwert einen Vergleicher (16) aufweist, dessen positiver Eingang vom Ausgangssignal der Zelle (10) beaufschlagt wird, über einen Verstärker (14), einen Gleichrichter ($D_1$) und einen ersten Integrationskreis ($R_2C_2$) mit geringer Zeitkonstante und dessen Ausgang mit dem negativen Eingang mittels einer Diodenschaltung ($D_2$) und eines Widerstandes ($R_3$) verbunden ist unter Beaufschlagung eines zweiten Integrationskreises ($R_1C_1$) mit höherer Zeitkonstante.

5. Vorrichtung nach einem der Ansprüche 1 bis 4, dadurch gekennzeichnet, daß der akustische Wellenleiter ein Rohr ist und daß das Rohr (2, 3) und der Reflektor (5) akustische Impedanzen aufweisen, die von derjenigen der Flüssigkeit differieren.

6. Vorrichtung nach einem der Ansprüche 1 bis 5, dadurch gekennzeichnet, daß der Referenzabschnitt (3) des akustischen Wellenleiters an seinem oberen Abschnitt Öffnunger (3a) aufweist.

7. Vorrichtung nach einem der Ansprüche 1 bis 6, dadurch gekennzeichnet, daß der Meßabschnitt (2) einen gebogenen Tail (2a) aufweist zwischen der Zelle (10) und dem Punkt, der der minimalen Höhe ($h_{min}$) entspricht, den die Flüssigkeit im Behälter erreichen kann, wobei der gebogene Teil (2a) eine derartige Länge aufweist, daß, wenn die Flüssigkeit auf der minimalen Höhe ($h_{min}$) ist, die Laufzeit für den Hin- und Rückweg der Ultraschallwelle mit Reflektionen an der Flüssigkeitsoberfläche auf der minimalen Höhe ($h_{min}$) größer ist als die Dämpfungsperiode der Zelle (10).

8. Vorrichtung nach einem der Ansprüche 1 bis 7, dadurch gekennzeichnet, daß die Zelle (10) ein piezoelektrisches Plättchen ist, dessen eine Fläche eines der Enden des Meßabschnitts (2) bildet und dessen andere Fläche das benachbarte Ende des Referenzabschnitts (3) bildet.

9. Vorrichtung nach Anspruch 8, dadurch gekennzeichnet, daß das Plättchen zwischen zwei Abschnitten (7, 8) eines Verbindungsstücks (4) eingeschlossen ist, welches rohrförmige Stutzen (9) aufweist, auf die die Enden des Meßabschnitts (2) und des Referenzabschnitts (3) aufgeschoben sind.

FIG.1

FIG.2

FIG.3

0 165 852

FIG.4a

FIG.4b

FIG.4c

FIG.4d

FIG.4e

3